# EUROPÄISCHE PATENTANMELDUNG

(11) **EP 2 472 209 A2**
(43) Veröffentlichungstag der Anmeldung: **04.07.2012**
(21) Anmeldenummer: 11195733.8
(22) Anmeldetag: 27.12.2011
(51) Int. Cl.: F28D 20/02, F25B 21/02

(54) **Verfahren zur Startdiagnose eines Wärmespeichermaterials**

(30) Priorität: 04.01.2011 DE 102011002424
(71) Anmelder: Robert Bosch GmbH, 70442 Stuttgart (DE)
(72) Erfinder: Brandes, Henrick, 71636 Ludwigsburg (DE); Rauchfuss, Lutz, 09648 Mittweida (DE)

(57) **Zusammenfassung**

Die Erfindung bezieht sich auf ein Verfahren und eine Vorrichtung zur Detektion des Zeitpunktes des Beginns der Kristallisation eines Wärmespeichermaterials (40), insbesondere eines Latentwärmespeichermaterials, welches mittels eines Peltierelementes (32) unterkühlt wird. Der Stromverlauf (10) der Stromstärke I des Peltierelementes (32) wird gemessen. Bei Detektion einer sich an eine kontinuierliche Stromabnahme (16) anschließenden Unstetigkeitsstelle (20, 22) im Stromverlauf (10), ab deren Erreichen die Stromstärke (I) wieder zunimmt (18), wird auf den Beginn des Kristallisationsvorganges im Wärmespeichermaterial (40) geschlossen.

## Beschreibung

### Stand der Technik

Es existieren verschiedene Salzhydrate, die unterkühlte Schmelzen bilden können und sich daher zu einer verlustarmen Wärmespeicherung eignen. Zum Start der Wärmeabgabe eines Wärmespeichermaterials ist ein Kristallisationskeim für dieses notwendig. Die Bereitstellung des Kristallisationskeims kann auf unterschiedliche Weise erfolgen. Beispielsweise kann der Kristallisationskeim in Gestalt einer Kühlrippe (Cold Finger) dargestellt sein, wobei diese Rippe ein Bereich im Wärmespeichermaterial kontinuierlich so kalt hält, dass das Wärmespeichermaterial nie vollständig schmilzt und somit beständig ein Kristallisationskeim erhalten bleibt.

DE 103 03 498 A1 bezieht sich auf eine Vorrichtung und ein Verfahren zur Kühlung des Wärmematerials eines Latentwärmespeichers. Die Vorrichtung umfasst ein Peltierelement, das von einem Temperaturfühler gesteuert ist. Beim Überschreiten einer ersten vorgegebenen Temperatur kühlt das Peltierelement das Wärmematerial in seiner Umgebung ab. Wird eine zweite vorgegebene Temperatur überschritten, so wird die weitere Wärmezufuhr unterbrochen. Teile des Latentwärmespeichermaterials werden örtlich begrenzt auf niederem Temperaturniveau gehalten.

Es sind weitere Verfahren bekannt, wie regenerierbare, übersättigte wässrige Lösung mittels lokaler Unterkühlung oder thermische Separation zur Kristallisation angeregt werden können.

Auch hier werden Peltierelemente eingesetzt, um eine lokale Unterkühlung im Latentwärmespeichermaterial zu generieren.

Gegenwärtig sind lediglich Verfahren bekannt, die unmittelbar aus einer Temperaturmessung auf das Einsetzen des Kristallisationsvorganges schließen lassen. Zur Messung der Temperatur ist der Einsatz eines Temperaturfühlers unabdingbar.

### Offenbarung der Erfindung

Der vorliegenden Erfindung liegt die Aufgabe zugrunde, das Einsetzen der Kristallisation und damit das Einsetzen der Wärmeabgabe eines Latentwärmespeichermaterials ohne Einsatz eines Temperaturfühlers bestimmen zu können.

Erfindungsgemäß wird vorgeschlagen, die Stromzufuhr eines zur Kühlung eingesetzten ein-oder mehrstufig ausgebildeten Peltierelements mit mindestens einem Stromsensor zu versehen und den Verlauf der Stromstärke messen, analysieren und auszuwerten. Bei der Versorgung von Peltierelementen, wie zum Beispiel aus Bismuttellurid Bi₂Te₃ mit konstanter Betriebsspannung, nehmen Wärmestrom und Stromstärke mit steigender Temperaturdifferenz zwischen der Heißseite und der Kaltseite des Peltierelementes ab.

Zu Beginn der Kristallisation eines Latentwärmespeichermaterials, bei dem sich im Allgemeinen um ein Phasenwechselmaterial (PCM = Phase Change Material) handelt, mittels lokaler Unterkühlung aus einem thermischen Gleichgewichtszustand heraus, fließen zunächst aufgrund der geringen Temperaturdifferenz zwischen der Heißseite und der Kaltseite ein großer Wärmestrom und eine große Stromstärke. In der Folgezeit vergrößert sich die Temperaturdifferenz zwischen der Heißseite und der Kaltseite am Peltierelement. Der Wärmestrom und die Stromstärke nehmen ab. Mit Beginn der Kristallisation und mit Beginn der Wärmeabgabe des Wärmespeichermaterials steigt die Temperatur im Wärmespeichermaterial mit sehr hoher Dynamik. Folglich sinkt die Temperaturdifferenz zwischen der Heißseite und der Kaltseite am Peltierelement wieder und es kommt zu einer Unstetigkeitsstelle bei der Stromaufnahme des Peltierelementes. Die Unstetigkeitsstelle markiert mit zu vernachlässigender Verzögerung den Beginn der Kristallisation und kann zur Diagnose eines erfolgreichen Startes des Kristallisationsvorganges genutzt werden.

Werden andere thermoelektrisch wirksame Materialien, wie zum Beispiel BiSb, PbTE, SiGE, CoSb3-basierte Skutterudite und ähnliche Materialien zur Erzeugung einer Temperaturdifferenz eingesetzt, können abweichende Verläufe der Stromstärke auftreten. Im Extremfall stiege dabei die Stromstärke zunächst an, wobei diese mit Einsetzen des Kristallisationsvorganges wieder absinken würde.

Gemeinsames Merkmal beim Start der Wärmefreisetzung durch das Wärmespeichermaterial ist die Unstetigkeitsstelle im Stromverlauf, die unter Berücksichtigung einer thermischen Verzögerung am Stromsensor des Peltierelementes detektiert werden kann.

Das erfindungsgemäß vorgeschlagene Verfahren bzw. das erfindungsgemäß modifizierte Peltierelement kann als Diagnoseeinheit für ein Latentwärmespeicher sowohl im stationären Betrieb, so zum Beispiel bei solaren Wärmespeichern, wie auch im mobilen Bereich, so zum Beispiel bei Komfortheizern, Speicher zur Aufwärmzeitverkürzung an Fahrzeugen eingesetzt werden. Neben den genannten Salzhydraten als Wärmespeichermaterialien sind prinzipiell alle unterkühlbaren Flüssigkeiten als Wärmespeichermaterialien geeignet, demzufolge auch hochreines Wasser.

Kurze Beschreibung der Zeichnungen

Anhand der Zeichnung wird die Erfindung nachstehend eingehender beschrieben.

Es zeigt:
- Figur 1: einen Stromverlauf in einem Peltierelement bei Start der Wärmeabgabe durch einen Wärmespeicher mittels lokaler Unterkühlung, und
- Figur 2: in schematischer Weise die Komponenten einer Anordnung zur Erfassung des Stromverlaufes gemäß Figur 1 in einem Peltierelement.

Ausführungsvarianten

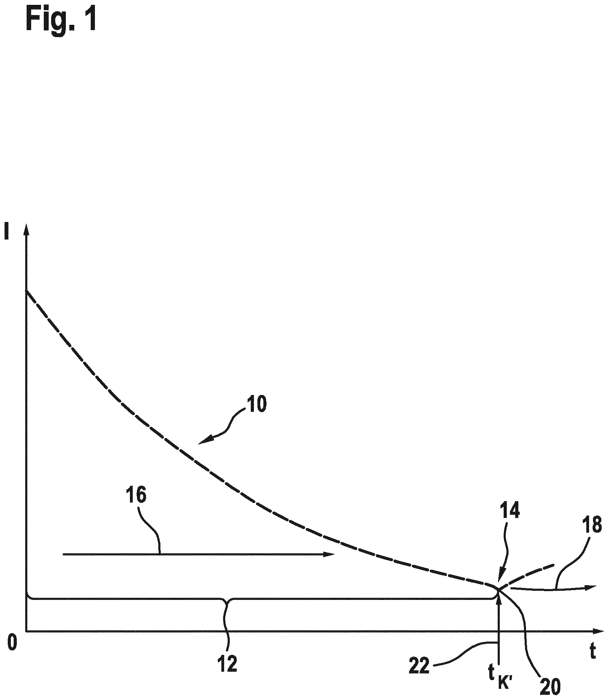

Figur 1 zeigt den Stromverlauf bei Start der Kristallisation eines Wärmespeichermaterials, insbesondere eines Phasenwechselmaterials eines Latentwärmespeichermaterials, wie zum Beispiel ein Salzhydrat.

Beim erfindungsgemäß vorgeschlagenen Verfahren handelt es sich um eine Startdiagnose für ein Phasenwechselmaterials (PCM = Phase Change Material) durch Auswertung des Stromgradienten.

Aus der Darstellung gemäß Figur 1 geht hervor, dass beim Start der Kristallisation eines Wärmespeichermaterials, insbesondere eines Phasenwechselmaterials (PCM) durch lokale Unterkühlung mittels eines Peltierelementes aus einem thermischen Gleichgewichtszustand heraus aufgrund der geringen Temperaturdifferenz zwischen Heiß- und Kaltseite ein großer Wärmestrom und eine relativ großer Strom fließt. Der Stromverlauf 10 nimmt während einer ersten Zeitspanne 12 kontinuierlich ab. Während dieser ersten Zeitspanne 12 vergrößert sich die Temperaturdifferenz zwischen der Heißseite und der Kaltseite an dem zur lokalen Unterkühlung dienenden Peltierelements. Der sich während der ersten Zeitspanne 12 einstellende Wärmestrom und die Stromstärke nehmen kontinuierlich ab, vergleiche Bezugszeichen 16. Es ist eine Eigenschaft von Peltierelementen, die zum Beispiel aus Bismuttellurid Bi₂Te₃ gefertigt sind, mit konstanter Betriebsspannung betrieben werden, dass Wärmestrom und Stromstärke I mit steigender Temperaturdifferenz zwischen Heiß- und Kaltseite abnehmen. Dies lässt sich in Stromabnahme 16 in dem Diagramm gemäß Figur 1 deutlich ersehen.

Nach Ablauf der Zeitspanne 12 beginnt im Wärmespeichermaterial, insbesondere dem darin eingesetzten Phasenwechselmaterial die Kristallisation zu einem Kristallisationszeitpunkt t_{K}, vergleiche Bezugszeichen 22 in Figur 1. Mit Beginn der Kristallisation und damit der Wärmeabgabe des Wärmespeichermaterials steigt die Temperatur innerhalb des Wärmespeichermaterials, insbesondere des Phasenwechselmaterials mit hoher Dynamik. Folglich nimmt die Temperaturdifferenz zwischen der Heiß- und der Kaltseite am Peltierelement wieder ab und des kommt zu dem in Figur 1 dargestellten lokalen Minimum 20, d.h. eine Unstetigkeitsstelle bei der Stromaufnahme am Peltierelement. Diese in Figur 1 eingekreist dargestellte Unstetigkeitsstelle stellt eine lokales Minimum 20 dar, die den Beginn der Kristallisation im Wärmespeichermaterial, d.h. im Phasenwechselmaterial des Latentwärmespeichermaterials detektiert und zur Diagnose des erfolgreichen Beginns der Kristallisation genutzt werden kann. Damit ist der Einsatz eines Temperaturfühlers nicht mehr erforderlich.

Der Kristallisationsbeginn 22 zum Zeitpunkt t_{K'} und die damit einhergehende einsetzende Wärmeabgabe des Wärmespeichermaterials, insbesondere des Phasenwechselmaterials führt zu einem Temperaturanstieg 18 im Wärmespeichermaterial, der mit hoher Dynamik vor sich geht und der, vergleiche Diagramm gemäß Figur 1 zum Stromanstieg 18 führt, der sich an das Erreichen des lokalen Minimums 20, d.h. der besagten Unstetigkeitsstelle im Stromverlauf 10 anschließt.

Werden andere thermoelektrisch wirksame Materialien zur Erzeugung einer Temperaturdifferenz eingesetzt, können abweichende Verläufe 10 der Stromstärke I auftreten. Im Extremfall wäre zunächst eine ansteigende Stromstärke zu beobachten, die bei Einsetzen des Kristallisationsvorganges wieder sinkt.

Bei dem erfindungsgemäß vorgeschlagenen Verfahren wird das Charakteristikum eines Wärmespeichermaterials 40, insbesondere eines Phasenwechselmaterials ausgenutzt, dass der Start der Wärmefreisetzung durch dieses Material mit einer Unstetigkeit im Stromverlauf eines das Wärmespeichermaterials 40 lokal unterkühlenden Peltierelementes 32 einhergeht, die unter Berücksichtigung einer thermischen Verzögerung an mindestens einem Stromsensor 30, der in der Stromzufuhr des ein- oder mehrstufig ausgebildeten Peltierelementes 32 angeordnet ist, detektiert werden kann.

Als Wärmespeichermaterial 40 (Phase Change Material) kommen im Prinzip Paraffine, Carbonate und auch Fluoride zum Einsatz. Die eingesetzten Wärmespeichermaterialien haben alle die Forderung zu erfüllen, dass sie ein unterkühlbares Wärmespeichermaterial darstellen sollten. Die Unterkühlbarkeit des eingesetzten Wärmespeichermaterials stellt die zentrale Anforderung hinsichtlich der Einsetzbarkeit desselben dar.

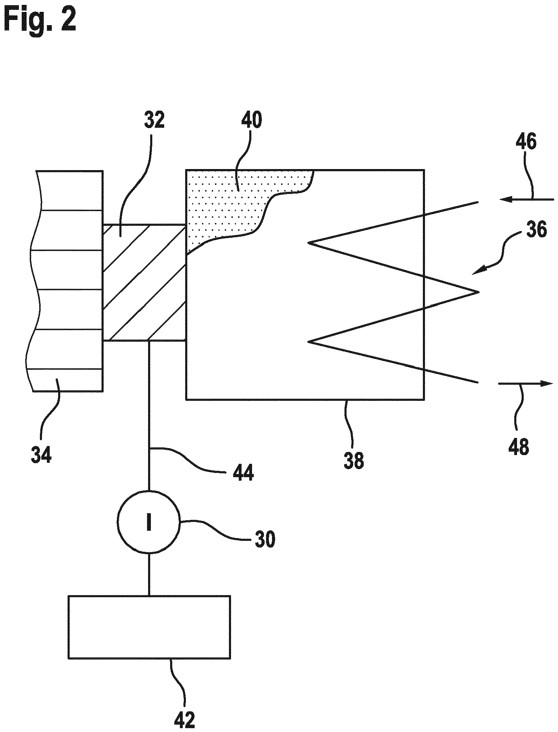

Figur 2 zeigt eine schematische Anordnung eines Latentwärmespeichers 38 mit einem Wärmespeichermaterial 40, insbesondere einem Phasenwechselmaterial (PCM), ein eine lokale Unterkühlung erzeugendes Peltierelement 32, in dessen Stromzufuhr mindestens ein Stromsensor aufgenommen ist.

Der Darstellung gemäß Figur 2 sind in schematischer Weise die Komponenten einer Anordnung zur Detektion einer Unstetigkeitsstelle im Stromverlauf eines Peltierelementes zu entnehmen.

Aus der stark vereinfachten Darstellung gemäß Figur 2 geht hervor, dass ein Peltierelement 32 zwischen dem Latentwärmespeicher 38 und einer Wärmeabfuhr 34 - hier grob angedeutet durch eine Verrippung - angeordnet ist. In einer Ansteuerleitung 44, die sich von einem Steuergerät 42 zum ein- oder mehrstufig ausgebildeten Peltierelements 32 erstreckt, befindet sich mindestens ein Stromsensor 30. Über diesen mindestens einen Stromsensor 30 lässt sich der Stromverlauf, der sich im Peltierelement 32 einstellt messen, insbesondere die in Figur 1 dargestellte Unstetigkeitsstelle, vergleiche Position 14 in Figur 1. Im Latentwärmespeicher 38 befindet sich das Wärmespeichermaterial 40, bei dem es sich um ein unterkühlbares Wärmespeichermaterial handelt, wobei es sich im Salzhydrat im Prinzip um alle unterkühlbaren Flüssigkeiten also auch hochreines Wasser, Paraffine, Carbonate, Fluoride und dergleichen mehr handeln kann. Wie Figur 2 zeigt, besteht die Möglichkeit, das im Latentwärmespeicher 38 aufgenommene Wärmespeichermaterial 40, bei dem es sich um ein Phasenwechselmaterial handelt, über einen Wärmetauscher 36 sowohl Wärme einzutragen als auch Wärme aus diesem auszukoppeln. Eine Eintrittsseite des schematisch in Figur 2 angedeuteten Wärmetauschers 36, ist durch Position 46 gekennzeichnet, ein Austritt des Wärmetauschers 36 ist durch Position 48 kenntlich gemacht.

Eine sich im Stromverlauf 10 gemäß Figur 1 einstellende Unstetigkeitsstelle 14 lässt sich durch die in Figur 2 dargestellte Anordnung detektieren, da in der Ansteuerleitung 44, die sich dem Steuergerät 42 und dem ein- oder mehrstufig ausgebildeten Peltierelements 32 erstreckt, mindestens ein Stromsensor 30 angeordnet ist. Über diesen ist eine Detektion des Stromverlaufes 10 im Peltierelement 32 möglich, so dass eine Unstetigkeitsstelle im Verlauf der Stromstärke gemessen, analysiert und ausgewertet werden kann.

Bei dem Peltierelement 32 handelt es sich beispielsweise um ein solches, welches aus Bismuttellurid Bi₂Te₃ gefertigt ist und mit konstanter Betriebsspannung betrieben wird.

## Patentansprüche

1. Verfahren zur Detektion des Zeitpunktes des Beginns der Kristalisation eines unterkühlbaren Wärmespeichermaterials (40), insbesondere eines Latentwärmespeichermaterials, welches mittels eines Peltierelementes (32) unterkühlt wird, **dadurch gekennzeichnet, dass** der Verlauf (10) der Stromstärke (I) des Peltierelementes (32) gemessen wird und bei Detektion einer sich an eine kontinuierliche Stromabnahme (16) anschließenden Unstetigkeitsstelle (20, 22), ab deren Erreichen die Stromstärke I wieder zunimmt (18), auf den Beginn des Kristallisationsvorganges im Wärmespeichermaterial (40) geschlossen wird.

2. Verfahren gemäß Anspruch 1, **dadurch gekennzeichnet, dass** der Start der Kristallisation des Wärmespeichermaterials (40), insbesondere eines Salzhydrates, durch lokale Unterkühlung aus einem metastabilen Zustand im thermischen Gleichgewicht heraus erfolgt.

3. Verfahren gemäß Anspruch 1, **dadurch gekennzeichnet, dass** sich während einer Zeitspanne (12) eine Temperaturdifferenz zwischen einer Heißseite und einer Kaltseite des Peltierelementes (32) vergrößert und die Abnahme (16) der Stromstärke I erfolgt.

4. Verfahren gemäß einem oder mehrerer der vorhergehenden Ansprüche, **dadurch gekennzeichnet, dass** bei Kristallisationsbeginn (22) ein Temperaturanstieg im Wärmespeichermaterial (40) erfolgt.

5. Verfahren gemäß einem oder mehrerer der vorhergehenden Ansprüche, **dadurch gekennzeichnet, dass** die Unstetigkeitsstelle (20) im Stromverlauf (10) am Stromsensor (30) mit einer thermisch bedingten Verzögerung detektiert wird.

6. Vorrichtung zur Durchführung des Verfahrens gemäß einem der Ansprüche 1 bis 5, mit einem Peltierelement (32), welches ein Wärmespeichermaterial (40), insbesondere ein Phasenwechselmaterial eines Latentwärmespeichers (38) lokal unterkühlt, **dadurch gekennzeichnet, dass** eine Stromzufuhr (44) zu einem ein- oder mehrstufigen Peltierelement (32) mindestens einen Stromsensor (30) aufweist.

7. Vorrichtung gemäß Anspruch 6, **dadurch gekennzeichnet, dass** der mindestens eine Stromsensor (30) in einer Stromzufuhr (44) zum Peltierelement (32) liegt, oder in ein Steuergerät (42) integriert ist.
